# EUROPÄISCHE PATENTSCHRIFT

(11) **EP 0 496 949 B1**
(45) Veröffentlichungstag und Bekanntmachung des Hinweises auf die Patenterteilung: **21.12.1994**
(21) Anmeldenummer: 91117424.1
(22) Anmeldetag: 12.10.1991
(51) Int. Cl.: B60G 21/055, F16F 1/16

(54) **Fahrschemel**
Vehicle Subframe
Faux-chassis

(30) Priorität: 31.01.1991 DE 4102823
(43) Veröffentlichungstag der Anmeldung: 05.08.1992
(73) Patentinhaber: Dr.Ing.h.c. F. Porsche Aktiengesellschaft, 70435 Stuttgart (DE)
(72) Erfinder: Germano, Francesco, W-7123 Sachsenheim 1 (DE); Hentschel, Peter, W-7000 Stuttgart 30 (DE)

(56) Entgegenhaltungen:
- EP-A- 0 005 085
- FR-A- 2 342 425
- FR-A- 2 480 683
- FR-E- 85 786
- GB-A- 351 196
- GB-A- 952 779
- US-A- 2 935 347
- US-A- 4 143 887
- PATENT ABSTRACTS OF JAPAN vol. 13, no. 94 (M-804)(3442) 6. März 1989 & JP-A-63 287 616

## Beschreibung

Die Erfindung bezieht sich auf einen Fahrschemel mit Lagerungen für einen radträgerseitig angelenkten Stabilisator-Stab einer Radaufhängung eines Kraftfahrzeugs nach dem Oberbegriff des Anspruchs 1.

Aus der FR-PS 24 80 683 ist ein an einem aufbauseitig befestigten, stabilen und selbsttragenden Fahrschemel in Lagerungen gehaltener Stabilisator bekannt, der endseitig am Radträger eines Rades gehalten ist. Der Stabilisator ist als Stange ausgeführt und weist im querverlaufenden Teil eine Ausbauchung auf, die von einer Lagerschelle formschlüssig umgriffen und oberseitig des Fahrschemels befestigt ist. Dieser Stabilisator hat nur die Aufgabe, die über Radführungsglieder am als selbsttragende Einheit ausgebildeten Fahrschemel gehaltenen Fahrzeugräder in ihrer Federungsbewegung abhängig voneinander zu verstellen und eine Beeinflussung des Fahrschemels hinsichtlich seiner Stabilität ist nicht vorgesehen.

Aus der gattungsgemäßen JP-A-63-287 616 ist ein Fahrschemel eines Kraftfahrzeuges bekannt, der mit einem Stabilisator über Lagerungen verbunden ist. Der Stabilisator weist zur Festlegung in Fahrzeugquerrichtung im Abstand verlaufende im Querschnitt rechteckige Aufnahmen sowie mit diesen Aufnahmen formschlüssig korrespondierende Lageraußenteile auf, die an stirnseitigen Schenkeln des Fahrschemels gehalten sind. Desweiteren ist aus der US-A-2,935,347 ein an einem Rahmen elastisch gehaltener Lenkerarm bekannt, der einen Zapfen mit einer negativen keilförmigen Anformung aufweist und unter Zwischenschaltung eines elastischen Elements in einer Hülse des Rahmens gehalten ist.

Aufgabe der Erfindung ist es, einen stabilen Fahrschemel in Verbindung mit einem Stabilisator für eine Radaufhängung eines Kraftfahrzeugs zu schaffen, der eine exakte Radbewegung beider Räder gewährleistet und der Stabilisator in Fahrzeugquerrichtung nahezu unverschiebbar in Lagerungen des Fahrschemels gehalten ist.

Diese Aufgabe wird erfindungsgemäß durch die kennzeichnenden Merkmale des Anspruchs 1 gelöst. Weitere vorteilhafte Merkmale beinhalten die Unteransprüche.

Der aus zwei Schenkeln und einer Querbrücke in Leichtbauweise ausgeführte Fahrschemel ist in sich durch Schenkel geringer Querschnitts-Abmessungen relativ verwindungsweich, was für die exakte Funktion der Radaufhängung nachteilig ist. Ein solcher Fahrschemel wird in vorteilhafter Weise nach der Erfindung durch einen als weitere Querbrücke verwendeten Stabilisator-Stab als stabiles und verwindungssteifes Tragwerk ausgebildet. Dies wird durch eine relativ starre Anbindung des querverlaufenden Abschnitts des Stabilisator-Stabs über Lagerungen an den Schenkeln des Fahrschemels bewirkt. Die Lagerungen sind vorzugsweise an den freien Enden der Schenkel vorgesehen und weisen im Stabilisator-Stab eine umlaufende, keilförmige negative Einformung auf, die mit einer umlaufenden, positiven keilförmigen Ausformung an einem Lageraußenteil formschlüssig korrespondiert und eine sichere Fixierung der Schenkel des Fahrschemels gewährleistet ist.

Diese sichere Festlegung der Schenkel wird insbesondere durch die Ausbildung der miteinander in Eingriff stehenden Einformung und Ausformung der Aufnahme im Lageraußenteil erzielt, wobei die Kennung der elastischen Hülse in Fahrzeugquerrichtung relativ hart ist, so daß der Stabilisator-Stab nicht querverschiebbar ist.

Das Lageraußenteil ist als Hülsenelement ausgeführt und besteht zur Montagevereinfachung aus zwei Halbschalen, wobei die eine Halbschale mit einer Konsole z.B. durch Schweißen fest verbunden ist, die mit dem Schenkel des Fahrschemels verschraubt wird. Die beiden Halbschalen werden miteinander über Schrauben zusammengehalten, wobei der Stab des Stabilisators mit der keilförmigen Einformung am Stabilisator-Stab sowohl in einer mit dem Stab durch Schweißen, Aufschrumpfen oder dergleichen verbundenen Hülse versehen sein kann oder die Einformung in der Stange wird durch einen Stauch- und Drückvorgang erzielt.

Der Stabilisator kann auch in einer zur ersten Querbrücke im Abstand angeordneten zweiten Querbrücke angeordnet sein und zusammen mit dieser eine Versteifungseinheit für den Fahrschemel bilden.

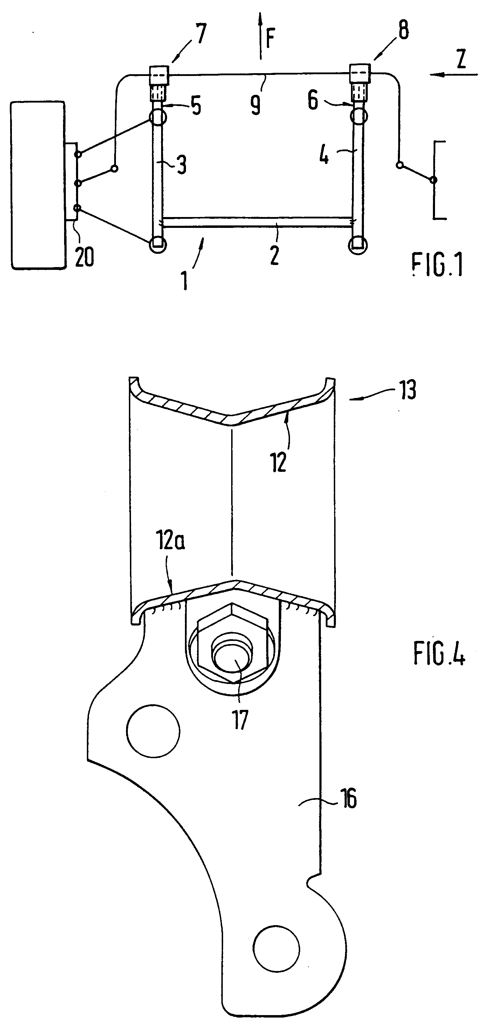

Ein Ausführungsbeispiel der Erfindung ist in der Zeichnung dargestellt und wird im folgenden näher beschrieben. Es zeigen
- Fig. 1: eine schematische Darstellung des Fahrschemels in Draufsicht mit Stabilisator sowie Lagerungen,

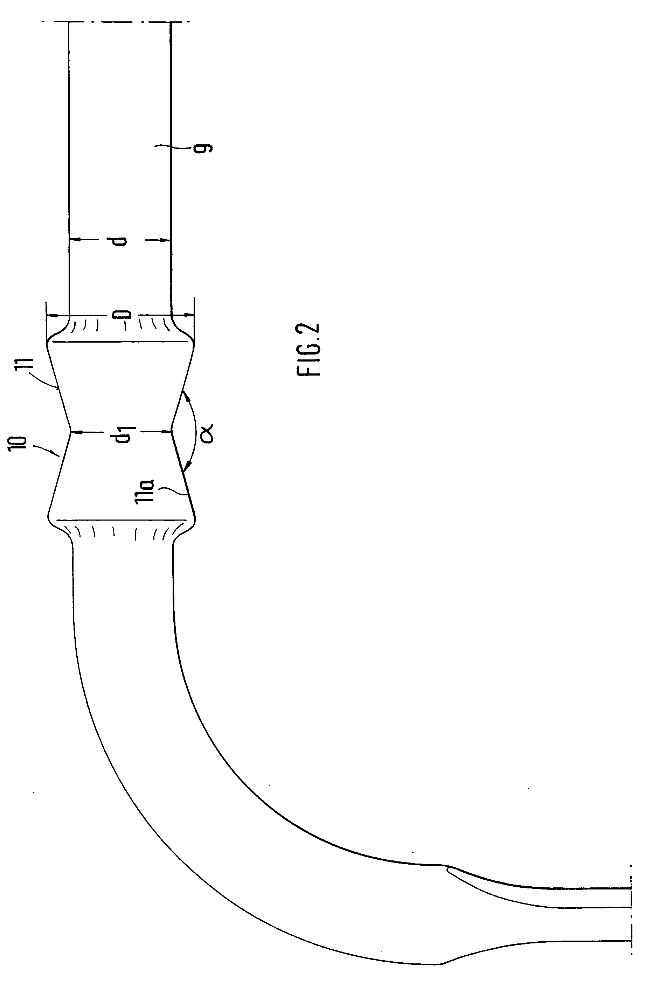

- Fig. 2: eine Draufsicht auf eine Lagerung des Stabilisators mit einer umlaufenden keilförmigen negativen Einformung,
- Fig. 3: einen Schnitt durch ein Lageraußenteil, in Fahrtrichtung Z der Fig. 1 gesehen,

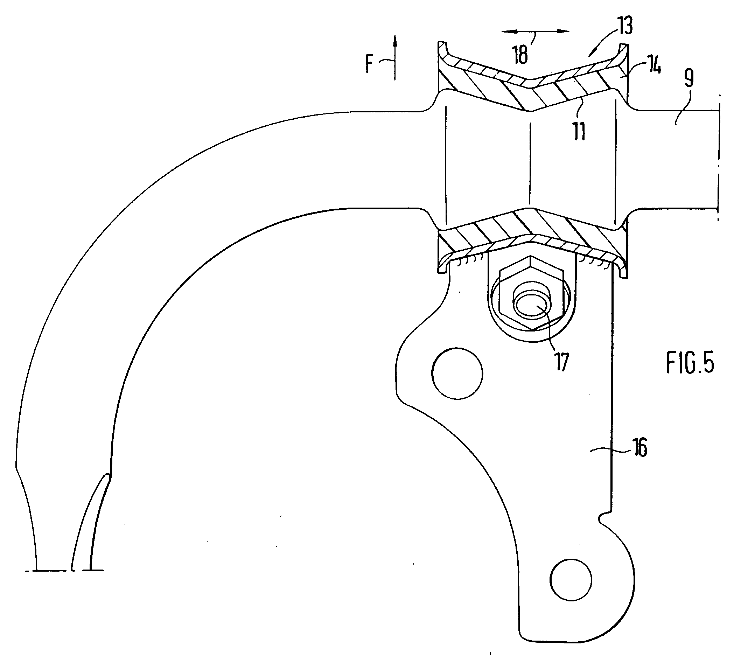

- Fig. 4: einen Schnitt nach der Linie IV-IV der Fig. 3 gesehen, und
- Fig. 5: einen Schnitt durch eine keilförmige Aufnahme am Stabilisator-Stab mit Lageraußenteil.

Der Fahrschemel 1 umfasst zwei über eine Querbrücke 2 verbundene Schenkel 3 und 4, die an ihren freien stirnseitigen Enden 5 und 6 Lagerungen 7 und 8 für einen Stabilisator-Stab 9 aufweisen. Dieser ist U-förmig ausgeführt und mit seinen abgebogenen Armen am Radträger 20 angelenkt.

Der Stabilisator-Stab 9 verbindet über seine Lagerungen 7 und 8 einerseits die beiden Schenkel 3 und 4 des Fahrschemels festigkeitsmäßig miteinander und andererseits ist der Stabilisator-Stab 9 in den Lagerungen 7 und 8 drehbar, aber unverschieblich in Fahrzeugquerrichtung (Pfeilrichtungen 18) gehalten. Durch diese Halterungen des Stabilisator-Stabes 9 wird ein stabiler Verbund des Fahrschemels 1 gebildet, der nunmehr quasi zwei im Abstand zueinander angeordnete Querbrücken, durch die - in bezug auf die Fahrtrichtung F - hintere erste Querbrücke 2 und die aus dem Stabilisator-Stab 9 gebildete zweite Querbrücke bildet und die beiden Schenkel 3 und 4 des Fahrschemels 1 eine relativ starre Anbindung aufweisen.

Die Lagerungen 7 und 8 weisen jeweils Aufnahmen 10 am Stabilisator-Stab 9 auf, die aus einer umlaufenden, negativen keilförmigen Einformung 11 bestehen. Die Aufnahme 10 weist im kleinsten Durchmesser einen dem Aussendurchmesser d des Stabes 9 entsprechenden Durchmesser auf, wobei die ansteigenden Flanken 11a im größten Durchmesser einen dem Stabdurchmesser übersteigenden Durchmesser D aufweisen. Mit dieser Einformung 11 steht eine entsprechend positiv ausgeführte Ausformung 12 eines Lageraußenteils 13 in Eingriff, deren Flanken 12a parallel zu den Flanken 11a der Einformung 11 angeordnet sind. Zwischen der Einformung 11 und der Ausformung 12 ist eine elastische Hülse 14 angeordnet, die eine in Fahrzeugquerrichtung relativ harte Kennung aufweist.

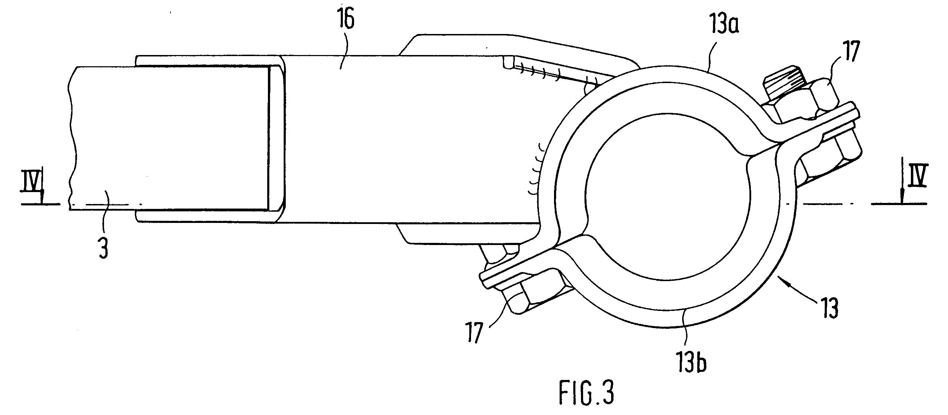

Das Lageraußenteil 13 besteht aus zwei Halbschalen 13a und 13b, wobei die eine Halbschale 13a mit einer Konsole 16 fest verbunden ist und die weitere Halbschale 13b über Schrauben 17 an der Halbschale 13a befestigbar ist. Zwischen den beiden Halbschalen 13a und 13b wird der Bereich des Stabilisator-Stabes 9 mit der Einformung 11 eingespannt gehalten. Die Konsolen 16 sind, wie Fig. 3 näher zeigt, an den Schenkeln 3 und 4 des Fahrschemels 1 befestigt. Die keilförmige Einformung 11 an dem Stabilisator-Stab 9 ist in der Weise keilförmig ausgeführt, daß sie in Fahrzeugquerrichtung (Pfeilrichtungen 18) unverschiebbar ist, was durch eine entsprechende Kennung der elastischen Hülse 14 erzielt wird, die dann in Querrichtung entsprechend hart ausgeführt ist.

Die keilförmige Einformung 11 kann, wie dargestellt, einstückig mit dem Stab 9 durch einen Stauch- und Drückvorgang hergestellt werden. Desweiteren ist es auch möglich, eine Hülse mit einer Einformung 11 auszubilden und diese Hülse auf den Stab 9 zu schrumpfen bzw. mit dem Stab 9 zu verschweißen.

## Patentansprüche

1. Ein Fahrschemel in Verbindung mit einem radträgerseitig angelenkten Stabilisator-Stab für eine Radaufhängung eines Kraftfahrzeugs, wobei der Fahrschemel zwei über eine Querbrücke verbundene Schenkel umfasst, die an ihren freien stirnseitigen Enden Lagerungen für den Stabilisator-Stab aufweisen, wobei der Stabilisator-Stab als weitere Querbrücke des Fahrschemels ausgebildet und in den Lagerungen des Fahrschemels abgestützt ist, die an den stirnseitigen Enden der Schenkel angeordnet sind und den Stabilisator-Stab in Fahrzeugquerrichtung unverschiebbar halten und wobei die Lagerungen aus an dem Stab des Stabilisators umfangsseitig im Abstand verlaufenden Aufnahmen sowie mit diesen Aufnahmen formschlüssig korrespondierenden Lageraußenteilen stehen, dadurch gekennzeichnet, daß die Aufnahmen (10) des Stabilisator-Stabes (9) jeweils aus einer umlaufenden, negativen keilförmigen mit Umfangsflächen (Flanken 11a) versehenen Einformung (11) bestehen, in die unter Zwischenschaltung einer elastischen Hülse (14) das Lageraußenteil (13) mit einer umlaufenden, positiven keilförmigen Ausformung (12) eingreift und die keilförmige Einformung (11) unter einem stumpfen Winkel (à) zueinander stehende Flächen (Flanken 11a) aufweist, denen parallele Flächen (Flanken 12a) der Ausformung (12) gegenüberstehen, wobei die beiden Umfangsflächen (Flanken 11a) der Einformung (11) im zusammentreffenden Bereich einen Durchmesser (d1) aufweisen, der etwa dem Außendurchmesser (d) des Stabes (9) entspricht und der größte Durchmesser (D) der Umfangsflächen (Flanken 11a) den Stabdurchmesser (d) übersteigt.

2. Fahrschemel nach Anspruch 1, dadurch gekennzeichnet, daß das Lageraußenteil (13) zweischalig ausgebildet ist, wobei das erste halbschalige Lageraußenteil (13a) unlosbar mit einer Befestigungskonsole (16) des Fahrschemels (1) und das zweite halbschalige Lageraußenteil (13b) über Schrauben (17) am ersten Lageraußenteil (13a) bei umgreifender Aufnahme des Stabilisator-Stabes (9) befestigbar ist.

3. Fahrschemel nach Anspruch 1, dadurch gekennzeichnet, daß die negativen Aufnahmen (10) des Stabilisator-Stabes (9) aus einer gestauchten und gedrückten umlaufenden keilförmigen Einformung (11) bestehen, die einteilig mit dem Stab (9) ausgebildet sind.

4. Fahrschemel nach Anspruch 1, dadurch gekennzeichnet, daß die Aufnahmen (10) aus auf den Stabilisator-Stab (9) aufgeschrumpften Hülsen mit jeweils einer keilförmigen Einformung bestehen.

5. Fahrschemel nach Anspruch 1, dadurch gekennzeichnet, daß die Aufnahmen (10) aus auf den Stabilisator-Stab geschobene Hülsen mit jeweils einer keilförmigen Einformung (11) bestehen und die Hülsen mit dem Stab (9) durch Schweißen verbunden sind.

## Claims

1. A subframe in conjunction with a stabilizer rod articulated to a wheel support for a wheel suspension of a motor vehicle, wherein the subframe comprises two arms connected by way of a transverse bridge and provided at the free front ends thereof with mountings for the stabilizer rod, wherein the stabilizer rod is formed as a further transverse bridge of the subframe and is supported in the mountings of the subframe, the mountings being arranged at the front ends of the arms and holding the stabilizer rod non-displaceably in the transverse direction of the vehicle, and wherein the mountings comprise receiving means extending at a distance on the periphery of the rod of the stabilizer and outer mounting parts corresponding to the said receiving means with positive locking, **characterized in that** the receiving means (10) of the stabilizer rod (9) each comprise a continuous depression (11) with a negative wedge-shape which is provided with peripheral surfaces (flanks 11a) and into which the outer mounting part (13) with a continuous raised portion (12) with a positive wedge-shape engages with the interposition of a resilient sleeve (14) and which has surfaces (flanks 11a) at an obtuse angle (**à**) to each other, opposite which are parallel surfaces (flanks 12a) of the raised portion (12), wherein in the area of coincidence the two peripheral surfaces (flanks 11a) of the depression (11) have a diameter (**d1**) which substantially corresponds to the external diameter (**d**) of the rod (9) and the maximum diameter (**D**) of the peripheral surfaces (flanks 11a) exceeds the diameter (**d**) of the rod.

2. A subframe according to Claim 1, **characterized in that** the outer mounting part (13) is constructed as two shells, wherein the first half-shell outer part (13a) of the mounting can be secured undetachably to a fastening bracket (16) of the subframe (1) and the second half-shell outer part (13b) of the mounting can be secured by way of bolts (17) to the first outer part (13a) of the mounting with the receiving means of the stabilizer rod (9) engaging therearound.

3. A subframe according to Claim 1, **characterized in that** the negative receiving means (10) of the stabilizer rod (9) comprise an upset and compressed continuous wedge-shaped depression (11) formed integrally with the rod (9).

4. A subframe according to Claim 1, **characterized in that** the receiving means (10) comprise sleeves shrunk onto the stabilizer rod (9) and with a respective wedge-shaped depression.

5. A subframe according to Claim 1, **characterized in that** the receiving means (10) comprise sleeves pressed onto the stabilizer rod and with a respective wedge-shaped depression (11) and the sleeves are connected to the rod (9) by welding.

## Revendications

1. Faux-châssis en liaison avec une barre de stabilisateur, articulée côté support de roue, pour une suspension de roue d'un véhicule automobile, dans lequel le faux-châssis comporte deux côtés reliés par une traverse, qui présentent sur leurs extrémités frontales libres des supports pour la barre de stabilisateur, dans lequel la barre de stabilisateur est conçue comme une autre traverse du faux-châssis et est soutenue dans les supports du faux-châssis qui sont placés aux extrémités frontales des côtés et qui maintiennent la barre de stabilisateur de manière qu'elle ne puisse coulisser dans la direction transversale du véhicule et dans lequel les supports sont constitués de logements s'étendant périphériquement, espacés sur la barre de stabilisateur ainsi que de parties extérieures de palier de forme concordant avec celle de ces logements, caractérisé en ce que les logements (10) de la barre de stabilisateur (9) sont constitués chacun d'un enfoncement (11) continu, négatif, en forme de coin, pourvu de surfaces périphériques (flancs 11a), dans lequel s'engage, par insertion d'une douille (14) élastique, la partie extérieure de palier (13) avec un relief (12) continu, positif, en forme de coin et l'enfoncement (11) en forme de coin présente des surfaces (flancs 11a) formant entre elles un angle obtus (à), auxquelles font face des surfaces parallèles (flancs 12a) du relief (12), les deux surfaces périphériques (flancs 11a) de l'enfoncement (11) présentant dans la zone de coïncidence un diamètre (d1), qui correspond à peu près au diamètre extérieur (d) de la barre (9) et le plus grand diamètre (D) des surfaces périphériques (flancs 11a) dépassant le diamètre (d) de la barre.

2. Faux-châssis selon la revendication 1, caractérisé en ce que la partie extérieure de palier (13) comporte deux coques, la première partie extérieure de palier (13a) en demi-coque pouvant être fixée de manière inamovible avec une console de fixation (16) du faux-châssis (1) et la seconde partie extérieure de palier (13b) en demi-coque pouvant être fixée par des vis (17) sur la première partie (13a), en logeant tout autour la barre de stabilisateur (9).

3. Faux-châssis selon la revendication 1, caractérisé en ce que les logements (10) négatifs de la barre de stabilisateur (9) sont constitués d'un enfoncement (11) continu en forme de coin, comprimé et pressé, qui est formé d'une seule pièce avec la barre (9).

4. Faux-châssis selon la revendication 1, caractérisé en ce que les logements (10) sont faits de douilles rétractées sur la barre de stabilisateur (9) avec chacune un enfoncement en forme de coin.

5. Faux-châssis selon la revendication 1, caractérisé en ce que les logements (10) sont faits de douilles enfilées sur la barre de stabilisateur avec chacune un enfoncement (11) en forme de coin et les douilles sont assemblées par soudage avec la barre (9).
